# EUROPEAN PATENT APPLICATION

(11) **EP 4 696 658 A1**
(43) Date of publication of application: **18.02.2026**
(21) Application number: 24926251.0
(22) Date of filing: 13.09.2024
(51) Int. Cl.: C02F 1/00, C02F 1/24, A47L 11/30, A47L 11/32, A47L 11/33

(54) **WASTE WATER RECYCLING AND CIRCULATION SYSTEM**

(30) Priority: 17.06.2024 CN 202410772981
(71) Applicant: Ningbo Daman Electric Appliance Co., Ltd, Ningbo, Zhejiang 315400 (CN)
(72) Inventor: ZHANG, Luohuan, Ningbo, Zhejiang 315400 (CN); ZHANG, Daolin, Ningbo, Zhejiang 315400 (CN)
(74) Representative: Patent 42
(86) International application number: PCT/CN2024/118856
(87) International publication number: WO 2025/260521

(57) **Abstract**

The present invention discloses a sewage recycling system, and aims to provide a sewage recycling system which facilitates the use of water, reduces burdens, improves labor efficiency, saves water resources and improves the equipment practicability and functionality. The sewage recycling system comprises a machine body, a clean water tank and a recovery tank, wherein the clean water tank is provided with a water outlet and a water filling port, the recovery tank is provided with a sewage inlet, the machine body is connected with a water conveying assembly, the clean water tank is connected with a water outlet valve assembly, the recovery tank is connected with a quick plug-in connecting valve assembly, the water outlet valve assembly is detachably connected with one end of the water conveying assembly, the quick plug-in connecting valve assembly is detachably connected with the other end of the water conveying assembly.

## Description

### TECHNICAL FIELD

The present invention relates to the technical field of cleaning equipment, and in particular to a sewage recycling system.

### BACKGROUND

In daily life, cleaning equipment such as a floor cleaning machine, also known as a floor scrubber, is often used to clean floors or carpets. This machine is suitable for cleaning hard floors while absorbing dirty water, and it removes wastewater from a site and has the advantages of environmental friendliness, energy saving, high effectiveness, etc. The existing cleaning machine comprises a water usage system, which usually comprises a clean water tank and a sewage tank. The clean water tank is used for containing filled water for later use and used for effluent cleaning, and then residual water after use is collected through the sewage tank.

With reference to the Chinese patent with an authorized publication No. CN 220459304 U and an authorized publication date of February 9th, 2024, the utility model discloses a floor cleaning machine, comprising a machine body assembly, wherein a clean water bucket assembly and a sewage bucket assembly are detachably disposed on the machine body assembly, a floor brush assembly is disposed at a lower end of the machine body assembly, a metal support rod is disposed at the lower end of the machine body assembly, a fixing groove is formed in the floor brush assembly, and a locking piece for controlling the metal support rod and the fixing groove to be relatively fixed is disposed on the metal support rod. The technical solution has the shortcomings that once a cleaning area exceeds the capacity of the clean water tank, it becomes necessary to refill the clean water tank and empty the sewage tank multiple times in order to keep the equipment running continuously until a cleaning objective is completed. This results in the following problems: 1. water-related operations are complicated, the labor efficiency is reduced and labor burdens are increased; 2. water resources are wasted; and 3. it is necessary to purchase large-volume (large-capacity) equipment to prolong the single-use time, and the practicality and functionality of the equipment are reduced.

To sum up, a water usage structure in the cleaning equipment has the shortcomings of complicated operations, reduced labor efficiency, increased labor burdens, wasted water resources, and reduced practicality and functionality of the equipment in a using process.

### SUMMARY

In order to achieve the above purposes, the present invention adopts the following technical solution.

A sewage recycling system, comprising a machine body, a clean water tank and a recovery tank, wherein the clean water tank is provided with a water outlet and a water filling port, the recovery tank is provided with a sewage inlet, the machine body is connected with a water conveying assembly, the clean water tank is connected with a water outlet valve assembly, the recovery tank is connected with a quick plug-in connecting valve assembly, the water outlet valve assembly is detachably connected with one end of the water conveying assembly, the quick plug-in connecting valve assembly is detachably connected with the other end of the water conveying assembly, and a multistage filtering assembly and an exhaust float assembly are mounted in the recovery tank.

The clean water tank and the recovery tank are flexibly placed on the machine body and connected with the water conveying assembly of the machine body at the same time, and then the waterway connection between the clean water tank and the recovery tank is completed after the clean water tank and the recovery tank are fixed, thereby forming a structure in which the clean water tank is filled with water from the water filling port, water is discharged from the water outlet for use, sewage after use is sucked through the sewage inlet and enters the recovery tank, the multistage filtering assembly in the recovery tank performs high-efficiency filtration, and the filtered water returns to the clean water tank for use through the water conveying assembly. Thus, a workflow of recycling the sewage to the clean water tank for use is realized, the purposes of reducing water filling times or completing a cleaning operation with a single initial fill in operation are further realized. As a result, the resources are saved, the reduction in a volume of mobile water supply equipment system on the premise of ensuring sufficient consumption is achieved, and more areas can be cleaned with less water. The multistage filtering assembly can achieve and improve sewage purification, improve the filtration efficiency and effectiveness, reduce emptying and ensure the cleanliness of circulating water. The exhaust float assembly enables sewage to smoothly enter the recovery tank while preventing overflow. The clean water tank is connected with the water outlet valve assembly for connecting with a water outlet end of a water conveying assembly, and is connected with the quick plug-in connecting valve assembly of the recovery tank for connecting with a water inlet end of the water conveying assembly, so that the clean water tank and the recovery tank can be quickly connected and separated, which facilitate plugging and unplugging the clean water tank into/from the machine body in a use state and a water filling and cleaning state, and facilitates plugging and unplugging the recovery tank into/from the machine body in a use state and a cleaning and maintenance state; a use mode is flexible and the structural connection is stable; and the water outlet valve assembly ensures a unidirectional water flow through a valve body structure to prevent water leakage during use. The effects of facilitating the use of water, reducing the burdens, improving the labor efficiency, saving the water resources, improving the equipment practicability and functionality, reducing emptying, discharging water rapidly, achieving smooth liquid circulation while preventing water leakage, and facilitating stable connection and installation and maintenance due to flexibly plugged and unplugged structures, are achieved.

Preferably, the water conveying assembly comprises a water pump, a clean water tank water pipe, a recovery tank water pipe and a water pump control switch, wherein the water pump and the water pump control switch are both connected with the machine body, one end of the clean water tank water pipe is connected with the water pump, the other end of the clean water tank water pipe is connected with the water outlet valve assembly, one end of the recovery tank water pipe is connected with the water pump, the other end of the recovery tank water pipe is connected with the quick plug-in connecting valve assembly, the clean water tank is connected with a pressing block, and the water pump control switch is electrically connected with the water pump through the pressing block. The water inlet end of the water pump in the water conveying assembly is connected with a recovery tank water pipe, and the water outlet end is connected with the clean water tank water pipe, so that the filtered circulating water enters the recovery tank water pipe from the quick plug-in connecting valve assembly under the driving of the water pump, enters the clean water tank water pipe through the water pump, and finally enters the clean water tank to achieve the conveying flow of a waterway; and the clean water tank is connected with the clean water tank water pipe when the clean water tank is put into the machine body, and the recovery tank is connected with the recovery tank water pipe when the recovery tank is put into the machine body, so that the installation is fast and convenient; at the same time, after the clean water tank is put in, the water pump control switch is pressed by the pressing block, so that a circuit between the pressing block and the water pump is connected through the water pump control switch, and the circuit is immediately disconnected after the clean water tank is taken out of the machine body. The effects of improving the convenience of connection between structures and improving the use safety are improved.

Preferably, the clean water tank water pipe is connected with a waterway joint I, the waterway joint I is inserted into the water outlet valve assembly, the recovery tank water pipe is connected with a waterway joint **II,** the waterway joint II is inserted into the quick plug-in connecting valve assembly, the machine body is connected with a supporting frame I, a water pump mounting seat and a supporting frame II, the supporting frame I is provided with a clamping groove I, the supporting frame II is provided with a clamping groove **II,** the waterway joint I is clamped with the clamping groove I, the waterway joint II is clamped with the clamping groove II, and the water pump is detachably connected with the water pump mounting seat. One end of the clean water tank water pipe is connected to the water outlet end of the water pump, and the waterway joint I is mounted at the other end of the clean water tank water pipe and used for connecting with the water outlet valve assembly; one end of the recovery tank water pipe is connected to the water inlet end of the water pump, and the waterway joint II is mounted at the other end of the recovery tank water pipe and used for being inserted into the quick plug-in connecting valve assembly, so as to further improve the connection strength; meanwhile, the supporting frame I and the supporting frame II are disposed in the machine body and used for fixing the clean water tank water pipe and the recovery tank water pipe, so as to arrange lines and prevent line confusion, wherein the waterway joint I is clamped with the clamping groove I and the waterway joint II is clamped with the clamping groove II to position and fix the structure, thereby preventing the structure where the water outlet valve assembly and the quick plug-in connecting valve assembly from shifting, and further providing a stable and quick connection foundation. The water pump is detachably connected to the machine body through the water pump mounting seat, which facilitates later maintenance. The effects of improving the positioning and installation efficiency of structures, improving the convenience of later maintenance, achieving clear wiring, and high efficiency and high stability of butting between the structures, and facilitating quick plugging and unplugging of the clean water tank and the recovery tank, are realized.

Preferably, the clean water tank is provided with a circulating water inlet, the water outlet and the circulating water inlet are both connected with water passage pipes, the waterway joint I is inserted into the water passage pipe in the circulating water inlet, the water passage pipe of the water outlet is connected with a water usage pipe, both the circulating water inlet and the water outlet are each provided with a water outlet valve assembly, the water outlet valve assembly comprises a valve spool, a water stop plug, a valve seat and a spring, the water stop plug is connected with one end of the valve spool, the other end of the valve spool is connected with a valve seat, the valve spool is sleeved with the spring, the water stop plug is placed on an outer side of one end of the water passage pipe and is in contact with one end of the water passage pipe, and the valve seat is limited in the water passage pipe through the spring. The clean water tank is connected with the water passage pipe by the formed circulating water inlet, the water outlet is also connected with the water passage pipe, the water passage pipe is used for the installation of the water outlet valve assembly, a valve body of the water outlet valve assembly is placed in the water passage pipe, one end of the valve body extends into a pipe opening where introduced water flows out and is connected with the water stop plug, the other end of the valve body is placed in the water passage pipe and connected with the valve seat, the valve seat is placed close to one end of the water passage pipe where introduced water enters, at the same time, an end of the waterway joint I is inserted into the pipe opening of this end, so that circulating water is introduced by the water pump and sprayed from the waterway joint I and enters the water passage pipe at the circulating water inlet; the spring is placed in the passage pipe at the circulating water inlet and a diameter of the spring is greater than a diameter of the pipe opening, at this time the water stop plug is pushed to compress the spring, a cross-sectional area of the valve body and the valve spool is smaller than an area of the passage pipe at the circulating water inlet, that is, a water flow pushes the water stop plug to move to open the pipe opening of the water passage pipe for discharging water, so that the circulating water flows into the clean water tank; similarly, continuous water supply enables the water flow in the clean water tank to push open the water stop plug in the water passage pipe of the water outlet, and the water flows out of the connected water usage pipe for use; and after water pump driving is stopped, the spring resets the water stop plugs at two places to reset and stop the flow again, thereby completing unidirectional water supply and quick water stopping. The effects of stable connection between the structures and the unidirectional water flow and prevention of water leakage with strong effectiveness are achieved.

Preferably, the recovery tank comprises a recovery bucket, a recovery upper cover and a recovery upper cover base, wherein the recovery bucket is connected with the machine body, the recovery upper cover base is clamped with the recovery bucket, the recovery upper cover is clamped with the recovery upper cover base, the quick plug-in connecting valve assembly comprises a connecting water pipe and a connecting valve seat, the connecting valve seat is provided with a water passage, the connecting valve seat is detachably connected with the recovery upper cover base, the waterway joint II is inserted into one end of the water passage, the other end of the water passage is connected with a quick-connect plug I, the connecting water pipe is inserted into the recovery upper cover base, one end of the connecting water pipe is inserted into the quick-connect plug **I,** and the other end of the connecting water pipe is connected with the multistage filtering assembly. The recovery bucket in the recovery tank is placed on the machine body, the recovery tank is in a structural shape with an opening at one end, the recovery upper cover base is clamped at the opening, the outer side surface of the recovery upper cover base is in a structural shape with a recessed space, so as to facilitate the placement of a structure including the quick plug-in connecting valve assembly, and then ensure the integrity of the surface by clamping with the recovery upper cover. The connecting valve seat in the quick plug-in connecting valve assembly is connected and fixed to the recovery upper cover base, and then fixed again by the clamped recovery upper cover; the connecting valve seat is inserted into the waterway joint II through the water passage, and the other end of the connecting valve seat is connected with one end of the connecting water pipe through the quick-connect plug II, so that the connecting water pipe is communicated with the waterway joint II; and the other end of the connecting water pipe extends into the recovery bucket and is connected with the multistage filtering assembly, so that the filtered circulating water enters the connecting water pipe for conveying. The detachable connection between the connecting valve seat and the recovery upper cover base facilitates later aging maintenance of the connecting valve seat. The effects of improving the integrity of equipment, facilitating the quick and stable assembly between the structures, smoothly conveying the circulating water and facilitating later maintenance are achieved.

Preferably, the multistage filtering assembly comprises a foam filter, a primary sewage filter and a secondary sewage filter, wherein the foam filter, the primary sewage filter and the secondary sewage filter are sequentially sleeved from outside to inside, one end of the secondary sewage filter abuts against a bottom of the recovery bucket, the other end of the secondary sewage filter is hermetically connected with the recovery upper cover base, the secondary sewage filter is internally provided with a pipe sleeve connector, a water inlet is formed at one end of the pipe sleeve connector, the water inlet is connected with a metal filter screen, the other end of the pipe sleeve connector is connected with a quick-connect plug II, the connecting water pipe is disposed in the secondary sewage filter, and the quick-connect plug II is inserted into the connecting water pipe. The primary sewage filter in the multistage filtering assembly sleeves the secondary sewage filter and the foam filter sleeves the primary sewage filter, so that the high-efficiency filtering effect is realized, the emptying phenomenon is reduced, the multistage filtering effect of sewage is realized at the same time, and the cleanliness and a reuse rate of water are improved; a lower end of the secondary sewage filter abuts against the bottom of the recovery bucket, an upper end of the secondary sewage filter is hermetically connected with the inner side surface of the recovery upper cover base, the connecting water pipe enters the secondary sewage filter during connection, the connecting water pipe is connected with the clamped pipe sleeve connector, one end of the pipe sleeve connector is clamped on an inner wall of the pipe sleeve connector, the quick-connect plug II at the other end is connected and communicated with the connecting water pipe at the same time, and the connecting water pipe is further fixed in the secondary sewage filter through the pipe sleeve connector, so that an extension length of the other end of the connecting water pipe can be adjusted, a port of the connecting water pipe can be prevented from overstretching and being blocked to cause a circulation failure, and meanwhile, the water inlet port of the connecting water pipe and the pipe sleeve connector can be kept at lower positions to cope with the situation that the recovery liquid level is gradually reduced due to a possible loss of water when the circulating water is in use, thereby enabling continuous suction. By mounting the metal filter screen at the water inlet, the filtered water can be re-filtered, and at the same time the structural strength of the water inlet of the pipe sleeve connector is supported, so that the installation connected with the pipe sleeve is more stable. The effects of improving the cleanliness and the reuse rate of water, reducing emptying, improving the flexibility of structural installation and ensuring the stability of conveying of incoming water are achieved.

Preferably, the exhaust float assembly comprises a float piece and an airway filter, the recovery upper cover base is connected with a diversion passage pipe and a float mounting seat, an exhaust cylinder is connected in the recovery bucket, one end of the exhaust cylinder is communicated with an exterior of the recovery bucket, a plurality of air holes are formed in a side surface and one end of the airway filter, the other end of the airway filter is connected with a stop plate, one end of the diversion passage pipe is inserted into the airway filter, the other end of the diversion passage pipe is inserted into the other end of the exhaust cylinder, and the float piece is rotatably connected with the float mounting seat. The inner side surface of the recovery upper cover base is connected with the diversion passage pipe, the diversion passage pipe and the recovery upper cover base are of an integrated structure, a pipe opening at one end of the diversion passage pipe is connected with the airway filter in the exhaust float assembly, a part with air holes in the airway filter is inserted into the diversion passage pipe for the inlet air flow to enter from the air holes and be discharged from a pipe opening, connected with the exhaust cylinder, at the other end of the diversion passage pipe, and the exhaust cylinder, which is in a hollow structure, is connected to the bottom of the recovery bucket and communicated with the outside, that is, when the recovery upper cover base is clamped, the pipe opening of the diversion passage pipe is inserted into a port of the exhaust cylinder to achieve the communication between the recovery bucket and the outside; the air holes distributed in the end face and the side surface ensure the exhaust and recovery efficiency; and the float mounting seat is used to connect the float piece and serves as a pivot point of the float piece. The effects of stable connection between the structures, prevention of overflow and smooth recovery are achieved.

Preferably, the recovery upper cover base is connected with a water guide curved panel, and the water guide curved panel is placed in the recovery bucket and arranged opposite to the sewage inlet. The upper cover base is connected with the water guide curved panel which is arranged opposite to the sewage inlet, so that the sewage entering the recovery tank is guided and buffered by the curved water guide plate and vertically falls onto the bottom of the recovery bucket for liquid level raising and collection, thereby preventing the sewage from directly hitting the multistage filtering assembly or preventing the water flow from being disordered, which could affect the movement stability of the float piece. The effects of protecting the multistage filtering assembly and improving the operational stability of the structures are achieved.

Preferably, the water filling port is connected with a fixing ring, the fixing ring is provided with a limiting groove, a water filling cover is inserted into the water filling port, one end of the water filling cover is connected with a holding block, a side surface of the other end of the water filling cover is connected with a clamping block, and a size of the clamping block is matched with that of the limiting groove. The clean water tank can be quickly filled with water through the water filling port, a wall surface of the water filling port is connected with a fixing ring, the water filling cover is used to close the water filling port and prevent the water from swinging out during movement; and after the water filling port is connected in the water filling cover, the clamping block passes through the limiting groove and rotates, so that the fixing ring can limit the clamping block and prevent the water filling cover from falling out easily, and the water filling cover can be removed by directly holding and rotating the holding block. The effects of improving the use stability of the clean water tank and the operational convenience of the structures are achieved.

Preferably, the clean water tank and the recovery upper cover are each provided with a limiting recess, the limiting recess is rotatably connected with a handle, the handle is clamped with the limiting recess, the limiting recess is provided with a yielding groove, and the yielding groove is formed near a middle of the handle. The water filling port at the end face of the clean water tank is communicated with the interior of the clean water tank, and the water filling cover is inserted into the water filling port, so that the water filling port can be opened and closed by the water filling cover, and at the same time the water filling cover is quickly fixed by clamping the clamping block into the limiting recess to prevent the water filling cover from falling off; the clean water tank and the recovery upper cover are each provided with the limiting recess, ends of the handle are rotatably connected to the limiting recess and can be placed in the limiting recess for storage, and the limiting recess is provided with the recessed yielding groove, so that when the handle is operated, fingers can be easily put in the yielding groove for grasping, and then it is convenient to quickly lift the clean water tank for filling water or remove the recovery upper cover for filter element maintenance. The effects of improving the operational convenience, and improving the convenience and efficiency of using the clean water tank and the recovery tank are achieved.

Preferably, a connecting rod and a handlebar are disposed at an upper end of the machine body, one end of the connecting rod is connected with the machine body, the other end of the connecting rod is connected with the handlebar, an included angle between the handlebar and the connecting rod is less than 180 degrees, and rollers are rotatably connected with a left side and a right side of a lower end of the machine body. The upper end of the machine body is connected with the handlebar through the connecting rod, and the rollers are matched and connected with the lower end of the machine body, so that the equipment can be easily pushed. At the same time, the handlebar is non-coaxially connected with the connecting rod at an included angle of less than 180 degrees, which is convenient for a hand to grasp and apply force. The rollers are placed on the side, close to the connecting rod above, of the lower end of the machine body, so that the movement is facilitated, and the machine body can be securely placed and is prevented from rolling and slipping away by itself. The effect of improving the convenience and comfort of the equipment in use is achieved.

The present invention has the beneficial effects that the use of water is facilitated through the circulation system, the burdens are reduced and the labor efficiency is improved; water resources are saved; the equipment practicability and functionality are improved; emptying is reduced and water is discharged quickly; liquid circulates smoothly and water leakage is prevented at the same time; plugging and unplugging of the structures are flexible, and stable connection, installation and maintenance are facilitated; the use safety is improved; the integrity of the equipment is improved; and the use stability and comfort and the operational convenience of the structures are improved.

### BRIEF DESCRIPTION OF THE DRAWINGS

FIG. 1 is a perspective view of the present invention;
FIG. 2 is an exploded view of FIG. 1 (without a recovery upper cover);
FIG. 3 is an exploded view of a machine body;
FIG. 4 is an exploded view of a clean water tank;
FIG. 5 is an exploded view of a recovery tank (without the recovery upper cover);
FIG. 6 is a schematic diagram showing connection between a water pump control switch and a pressing block;
FIG. 7 is a schematic structural diagram of a water outlet valve assembly;
FIG. 8 is a sectional view showing connection between a waterway joint I and a water passage pipe;
FIG. 9 is a sectional view of connection between a water outlet pipe and the water passage pipe; and
FIG. 10 is a sectional view of a multistage filtering assembly.

In the drawings: 1. machine body, 2. clean water tank, 3. recovery tank, 4. water conveying assembly, 5. water pump, 6. clean water tank water pipe, 7. recovery tank water pipe, 8. water pump control switch, 9. pressing block, 10. waterway joint I, 11. waterway joint II, 12. supporting frame I, 13. water pump mounting seat, 14. supporting frame II, 15. clamping groove I, 16. clamping groove II, 17. sewage inlet, 18. water passage pipes, 19. water usage pipe 20. valve spool, 21. water stop plug, 22. valve seat 23. spring, 24. recovery bucket, 25. recovery upper cover, 26. recovery upper cover base, 27. connecting water pipe, 28. connecting valve seat, 29. quick-connect plug I, 30. foam filter, 31. primary sewage filter, 32. secondary sewage filter, 33. pipe sleeve connector, 34. water inlet, 35. quick-connect plug II, 36. float piece, 37. airway filter, 38. diversion passage pipe, 39. float mounting seat, 40. exhaust cylinder, 41. metal filter screen, 42. fixing ring, 43. limiting recess, 44. handle, 45. yielding groove, 46. connecting rod, 47. handlebar, 48. roller, 49. water outlet valve assembly, 50. water outlet pipe, 51. quick-connect plug III, 52. limiting groove, 53. holding block, 54. water filling cover, 55. clamping block, 56. positioning column, 57. stop plate.

### DETAILED DESCRIPTION OF THE EMBODIMENTS

The technical solutions in the embodiments of the application will be described below clearly and completely with reference to the drawings in the embodiments of the present application. Obviously, the described embodiments are only some of the embodiments of the application, but not all of them. The following description of at least one exemplary embodiment is merely illustrative in nature and is in no way intended to limit the present application, its application, or uses. Based on the embodiments in the present application, all other embodiments obtained by a person skilled in the art without involving any inventive effort are within the scope of protection of the present application.

It is to be noted that the terminology used herein is for the purpose of describing particular embodiments only and is not intended to be limiting of exemplary embodiments according to the present application. As used herein, the singular forms are intended to include the plural forms as well, unless the context clearly indicates otherwise. Furthermore, it is to be understood that the terms "includes" and/or "comprises" when used in this specification, specify the presence of features, steps, operations, devices, assemblies and/or combinations thereof.

Relative arrangements of components, numerical expressions, and numerical values set forth in these embodiments do not limit the scope of the present application unless specifically stated otherwise. For ease of explanation, spatially relative terms such as "on", "under", "left" and "right" are used in the embodiments to explain the relationship between one element or feature shown in the figure and another element or feature. It will be understood that the spatial terms are intended to encompass different orientations of the device in use or operation in addition to the orientation depicted in the figures. For example, if the device in the figure is inverted, an element described as being "under" other elements or features will be secured "on" other elements or features. Thus, the exemplary term "on" can encompass both upper and lower orientations. The device may be otherwise secured (rotated 90 degrees or at other orientations) and the spatially relative statements used herein can be interpreted accordingly. At the same time, it should be understood that, for convenience of description, the dimensions of the various parts shown in the drawings are not drawn to actual scale. Techniques, processes, and equipment known to those of ordinary skill in the relevant art may not be discussed in detail, but where appropriate, should be considered part of the authorized specification. In all examples shown and discussed herein, any specific values should be interpreted as exemplary only, and not as limitations. Accordingly, other examples of exemplary embodiments may have different values. It should be noted that like reference numerals and letters denote like items in the following figures, and therefore, once an item is defined in one figure, it need not be further discussed in subsequent figures.

In addition, it should be noted that the use of the terms "first", "second" and the like to define components is merely for ease of distinguishing between the corresponding components, and if not otherwise stated, these terms have no special meaning and therefore should not be interpreted as limiting the scope of protection of the present application.

### Example 1:

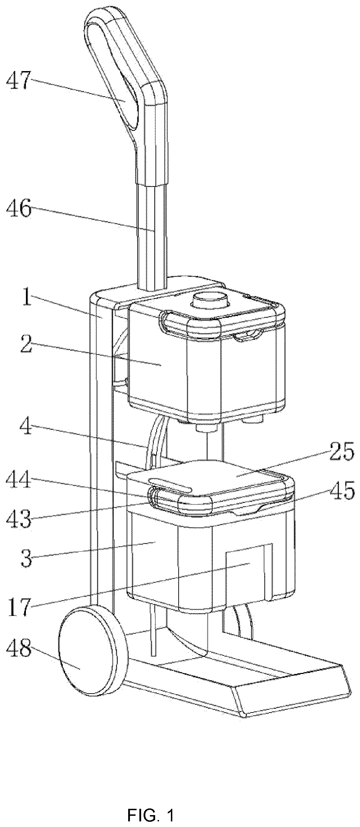

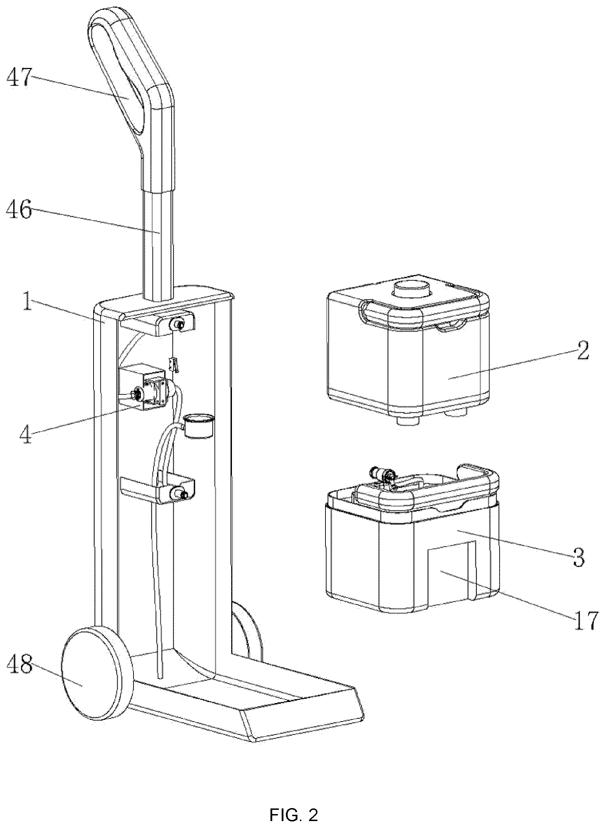

As shown in FIGS. 1 and 2, a sewage recycling system comprises a machine body 1, a clean water tank 2 and a recovery tank 3, wherein the clean water tank 2 is provided with a water outlet and a water filling port, the recovery tank 3 is provided with a sewage inlet 17, the machine body 1 is connected with a water conveying assembly 4, the clean water tank 2 is connected with a water outlet valve assembly 49, the recovery tank 3 is connected with a quick plug-in connecting valve assembly, the water outlet valve assembly 49 is detachably connected with one end of the water conveying assembly 4, the quick plug-in connecting valve assembly is detachably connected with the other end of the water conveying assembly 4, and a multistage filtering assembly and an exhaust float assembly are mounted in the recovery tank 3.

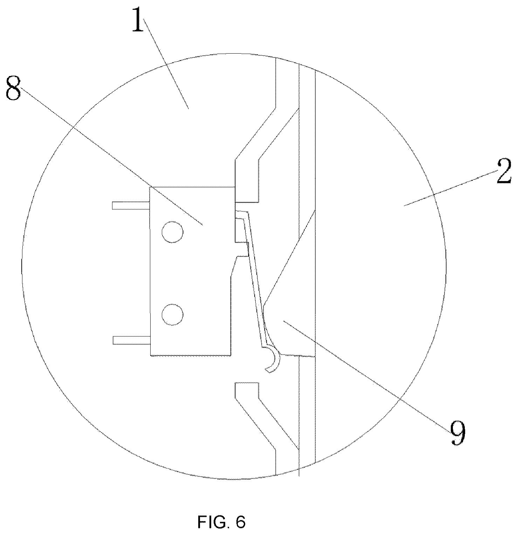

As shown in FIGS. 2, 3 and 6, the water conveying assembly 4 comprises a water pump 5, a clean water tank water pipe 6, a recovery tank water pipe 7 and a water pump control switch 8, wherein the water pump 5 and the water pump control switch 8 are both connected with the machine body 1, one end of the clean water tank water pipe 6 is connected with the water pump 5, the other end of the clean water tank water pipe 6 is connected with the water outlet valve assembly 49, one end of the recovery tank water pipe 7 is connected with the water pump 5, the other end of the recovery tank water pipe 7 is connected with the quick plug-in connecting valve assembly, the clean water tank 2 is connected with a pressing block 9, and the water pump control switch 8 is electrically connected with the water pump 5 through the pressing block 9.

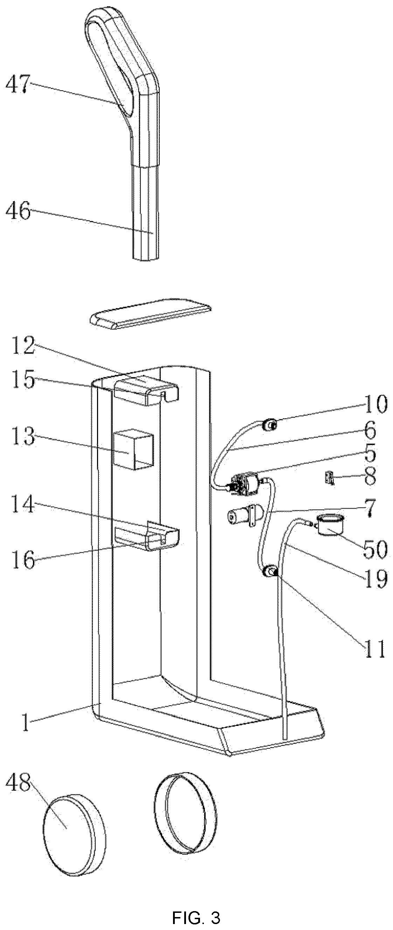

As shown in FIG. 3, the clean water tank water pipe 6 is connected with a waterway joint I 10, the waterway joint I 10 is inserted into the water outlet valve assembly 49, the recovery tank water pipe 7 is connected with a waterway joint II 11, the waterway joint II 11 is inserted into the quick plug-in connecting valve assembly, the machine body 1 is connected with a supporting frame I 12, a water pump mounting seat 13 and a supporting frame II 14, the supporting frame I 12 is provided with a clamping groove I 15, the supporting frame II 14 is provided with a clamping groove II 16, the waterway joint I 10 is clamped with the clamping groove I 15, the waterway joint II 11 is clamped with the clamping groove II 16, and the water pump 5 is detachably connected with the water pump mounting seat 13.

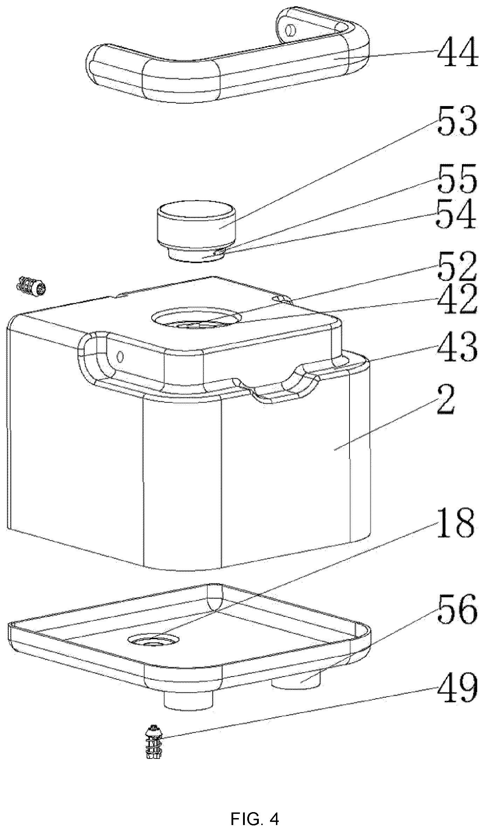

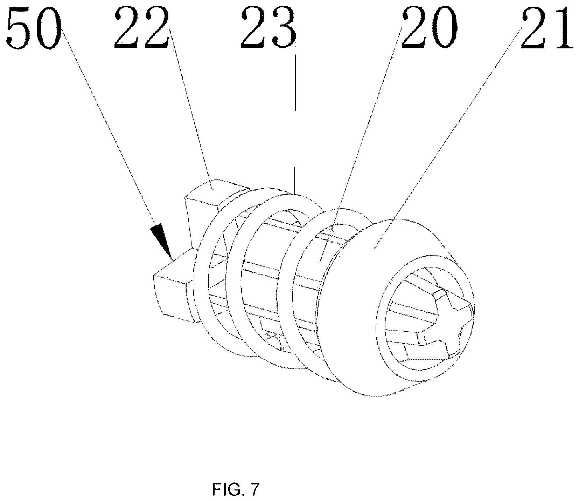

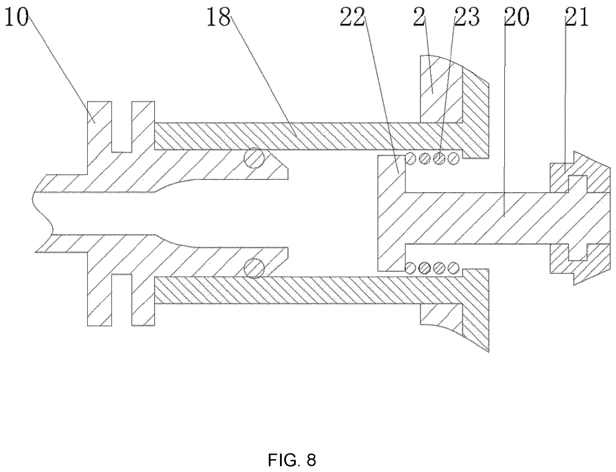

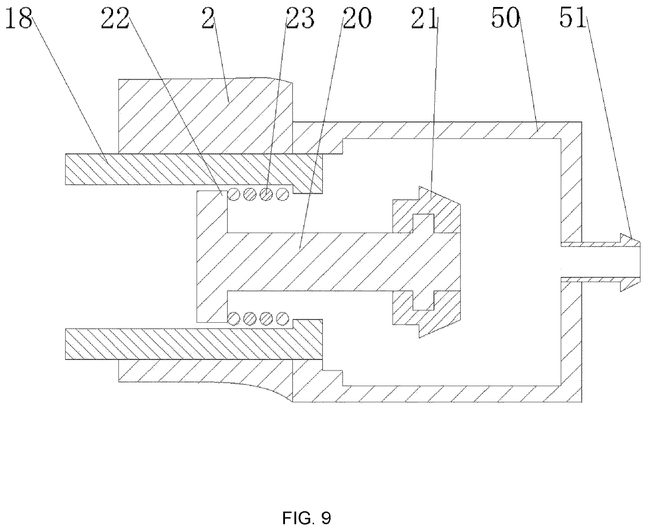

As shown in FIGS. 3, 4, 7, 8 and 9, the clean water tank 2 is provided with a circulating water inlet, the water outlet and the circulating water inlet are both connected with water passage pipes 18, the waterway joint I 10 is inserted into the water passage pipe 18 in the circulating water inlet, the water passage pipe 18 of the water outlet is connected with a water usage pipe 19, the circulating water inlet and the water outlet are each provided with a water outlet valve assembly 49, the water outlet valve assembly 49 comprises a valve spool 20, a water stop plug 21, a valve seat 22 and a spring 23, the water stop plug 21 is connected with one end of the valve spool 20, the other end of the valve spool 20 is connected with a valve seat 22, the valve spool 20 is sleeved with the spring 23, the water stop plug 21 is placed on an outer side of one end of the water passage pipe 18 and is in contact with one end of the water passage pipe 18, and the valve seat 22 is limited in the water passage pipe 18 through the spring 23.

As shown in FIGS. 1, 3 and 5, the recovery tank 3 comprises a recovery bucket 24, a recovery upper cover 25 and a recovery upper cover base 26, wherein the recovery bucket 24 is connected with the machine body 1, the recovery upper cover base 26 is clamped with the recovery bucket 24, the recovery upper cover 25 is clamped with the recovery upper cover base 26, the quick plug-in connecting valve assembly comprises a connecting water pipe 27 and a connecting valve seat 28, the connecting valve seat 28 is provided with a water passage, the connecting valve seat 28 is detachably connected with the recovery upper cover base 26, the waterway joint II 11 is inserted into one end of the water passage, the other end of the water passage is connected with a quick-connect plug I 29, the connecting water pipe 27 is inserted into the recovery upper cover base 26, one end of the connecting water pipe 27 is inserted into the quick-connect plug I 29, and the other end of the connecting water pipe 27 is connected with the multistage filtering assembly.

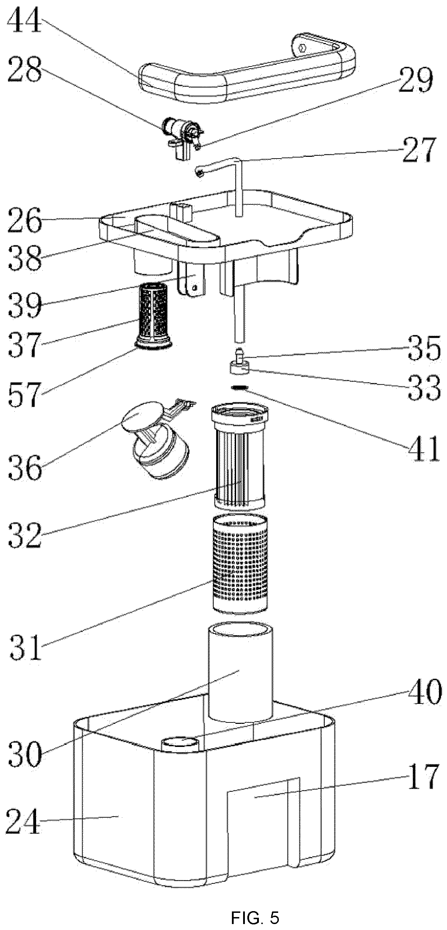

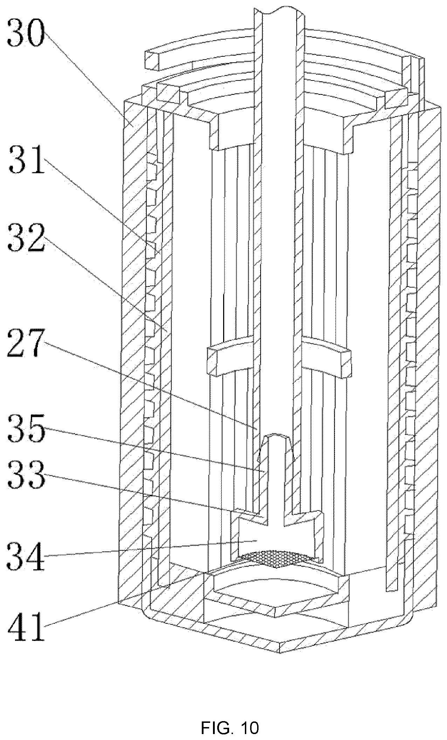

As shown in FIGS. 5 and 10, the multistage filtering assembly comprises a foam filter 30, a primary sewage filter 31 and a secondary sewage filter 32, wherein the foam filter 30, the primary sewage filter 31 and the secondary sewage filter 32 are sequentially sleeved from outside to inside, one end of the secondary sewage filter 32 abuts against a bottom of the recovery bucket 24, the other end of the secondary sewage filter 32 is hermetically connected with the recovery upper cover base 26, the secondary sewage filter 32 is internally provided with a pipe sleeve connector 33, a water inlet 34 is formed at one end of the pipe sleeve connector 33, the water inlet 34 is connected with a metal filter screen 41, the other end of the pipe sleeve connector 33 is connected with a quick-connect plug II 35, the connecting water pipe 27 is disposed in the secondary sewage filter 32, and the quick-connect plug II 35 is inserted into the connecting water pipe 27.

As shown in FIG. 5, the exhaust float assembly comprises a float piece 36 and an airway filter 37, the recovery upper cover base 26 is connected with a diversion passage pipe 38 and a float mounting seat 39, an exhaust cylinder 40 is connected in the recovery bucket 24, one end of the exhaust cylinder 40 is communicated with an exterior of the recovery bucket 24, a plurality of air holes are formed in a side surface and one end of the airway filter 37, the other end of the airway filter 37 is connected with a stop plate 57, one end of the diversion passage pipe 38 is inserted into the airway filter 37, the other end of the diversion passage pipe 38 is inserted into the other end of the exhaust cylinder 40, and the float piece 36 is rotatably connected with the float mounting seat 39.

The water filling port is connected with a fixing ring 42, the fixing ring 42 is provided with a limiting groove 52, a water filling cover 54 is inserted into the water filling port, one end of the water filling cover 54 is connected with a holding block 53, a side surface of the other end of the water filling cover 54 is connected with a clamping block 55, and a size of the clamping block 55 is matched with that of the limiting groove 52.

As shown in FIGS. 1 and 2, the clean water tank 2 and the recovery upper cover 25 are each provided with a limiting recess 43, the limiting recess 43 is rotatably connected with a handle 44, the handle 44 is clamped with the limiting recess 43, the limiting recess 43 is provided with a yielding groove 45, and the yielding groove 45 is formed near a middle of the handle 44. A connecting rod 46 and a handlebar 47 are disposed at an upper end of the machine body 1, one end of the connecting rod 46 is connected with the machine body 1, the other end of the connecting rod 46 is connected with the handlebar 47, an included angle between the handlebar 47 and the connecting rod 46 is less than 180 degrees, and rollers 48 are rotatably connected with a left side and a right side of a lower end of the machine body 1.

As shown in FIGS. 1-10, the water passage pipe 18 at the water outlet is connected with a water outlet pipe 50, the water outlet pipe 50 is connected with a quick-connect plug III 51, and the quick-connect plug III 51 is inserted into the water usage pipe 19, so that when water is used, thrust acting on the water stop plug 21 allows water to enter the water outlet pipe 50 and be discharged through the quick-connect plug III 51 into the water usage pipe 19 for use.

The water pump 5 and the water pump mounting seat 13 are screwed and mounted by screws to facilitate the installation and later maintenance of the water pump 5. The water pump 5 is an electromagnetic pump and may employ a diaphragm pump type as pumping driving equipment. The water pump control switch 8 is electrically connected in series with the water pump 5, and is turned on by placing the clean water tank 2 on the machine body 1, and the water pump control switch 8 is started by an external button (not shown in the figure).

The machine body 1 is connected with a supporting platform (not shown in the figure) and a suction motor device (not shown in the figure). Since a pipeline length of the water conveying assembly 4 (clean water tank water pipe 6 and recovery tank water pipe 7) is convenient to adjust, arrangement positions of the supporting platform and the suction motor device are more flexible. The supporting platform is vertically connected with the machine body 1 to support the horizontal placement of the clean water tank 2 and the recovery tank 3 (including the horizontal inserted connection with the waterway joint I 10 and the waterway joint II 11). The suction motor is used for driving the suction of sewage on a bottom surface, a specific position of the suction motor device is selected according to a suction position of the machine body 1, and an opening of the sewage inlet 17 is a suction port and is connected with and cooperates with the suction motor. The lower end face of the clean water tank 2 is connected with a positioning column 56, and the supporting platform is connected with the positioning column 56 through a positioning notch (not shown in the figure) with a suitable size to prevent the clean water tank 2 from slipping off the supporting platform, thereby improving the stability. The whole sewage recycling system can be used as a separate water supply system or a circulation system installed and integrated into the whole cleaning equipment as a water-using part.

When in use, after water is the clean water tank 2 is used, the sewage is sucked from the ground through the suction motor device and enters the recovery tank 3 from the sewage inlet 17, the recovery tank 3 collects the sewage (air in the recovery tank 3 is exhausted from the exhaust cylinder 40), the multistage filtering assembly filters the sewage, the water pump 5 is started, the sewage from the recovery tank 3 is continuously filtered by the foam filter 30, the primary sewage filter 31 and the secondary sewage filter 32 and then enters the connecting water pipe 27 at the other end of the pipeline connector 33 through the metal filter screen 41, the filtered water enters the clean water tank 2 through the connecting water pipe 27, the recovery tank water pipe 7 and the clean water tank water pipe 6 and is finally discharged from the water usage pipe 19 for use. During this period, the water valve assembly 49 ensures unidirectional conveying of the circulating water through opening and closing, so as to complete a cycle of water usage, recovery, filtration and water circulation.

The above embodiments are only intended to illustrate the technical solution of the present application and not to limit it; although the present invention has been described in detail with reference to the foregoing embodiments, those skilled in the art will appreciate that they can still make modifications to the technical solutions described in the foregoing embodiments, or make equivalent replacements to some technical features; however, these modifications or replacements do not make the essence of the corresponding technical solutions depart from the spirit and scope of the technical solutions of the embodiments of the present invention.

## Claims

1. A sewage recycling system, **characterized in that**, comprising: a machine body (1), a clean water tank (2) and a recovery tank (3), wherein the clean water tank (2) is provided with a water outlet and a water filling port, the recovery tank (3) is provided with a sewage inlet (17), the machine body (1) is connected with a water conveying assembly (4), the clean water tank (2) is connected with a water outlet valve assembly (49), the recovery tank (3) is connected with a quick plug-in connecting valve assembly, the water outlet valve assembly (49) is detachably connected with one end of the water conveying assembly (4), the quick plug-in connecting valve assembly is detachably connected with the other end of the water conveying assembly (4), and a multistage filtering assembly and an exhaust float assembly are mounted in the recovery tank (3).

2. The sewage recycling system according to claim 1, **characterized in that** the water conveying assembly (4) comprises a water pump (5), a clean water tank water pipe (6), a recovery tank water pipe (7) and a water pump control switch (8), wherein the water pump (5) and the water pump control switch (8) are both connected with the machine body (1), one end of the clean water tank water pipe (6) is connected with the water pump (5), the other end of the clean water tank water pipe (6) is connected with the water outlet valve assembly (49), one end of the recovery tank water pipe (7) is connected with the water pump (5), the other end of the recovery tank water pipe (7) is connected with the quick plug-in connecting valve assembly, the clean water tank (2) is connected with a pressing block (9), and the water pump control switch (8) is electrically connected with the water pump (5) through the pressing block (9).

3. The sewage recycling system according to claim 2, **characterized in that** the clean water tank water pipe (6) is connected with a waterway joint I (10), the waterway joint I (10) is inserted into the water outlet valve assembly (49), the recovery tank water pipe (7) is connected with a waterway joint II (11), the waterway joint II (11) is inserted into the quick plug-in connecting valve assembly, the machine body (1) is connected with a supporting frame I (12), a water pump mounting seat (13) and a supporting frame II (14), the supporting frame I (12) is provided with a clamping groove I (15), the supporting frame II (14) is provided with a clamping groove II (16), the waterway joint I (10) is clamped with the clamping groove I (15), the waterway joint II (11) is clamped with the clamping groove II (16), and the water pump (5) is detachably connected with the water pump mounting seat (13).

4. The sewage recycling system according to claim 3, **characterized in that** the clean water tank (2) is provided with a circulating water inlet, the water outlet and the circulating water inlet are both connected with water passage pipes (18), the waterway joint I (10) is inserted into the water passage pipe (18) in the circulating water inlet, the water passage pipe (18) of the water outlet is connected with a water usage pipe (19), both the circulating water inlet and the water outlet are each provided with a water outlet valve assembly (49), the water outlet valve assembly (49) comprises a valve spool (20), a water stop plug (21), a valve seat (22) and a spring (23), the water stop plug (21) is connected with one end of the valve spool (20), the other end of the valve spool (20) is connected with a valve seat (22), the valve spool (20) is sleeved with the spring (23), the water stop plug (21) is placed on an outer side of one end of the water passage pipe (18) and is in contact with one end of the water passage pipe (18), and the valve seat (22) is limited in the water passage pipe (18) through the spring (23).

5. The sewage recycling system according to claim 3, **characterized in that** the recovery tank (3) comprises a recovery bucket (24), a recovery upper cover (25) and a recovery upper cover base(26), wherein the recovery bucket (24) is connected with the machine body (1), the recovery upper cover base (26) is clamped with the recovery bucket (24), the recovery upper cover (25) is clamped with the recovery upper cover base (26), the quick plug-in connecting valve assembly comprises a connecting water pipe (27) and a connecting valve seat (28), the connecting valve seat (28) is provided with a water passage, the connecting valve seat (28) is detachably connected with the recovery upper cover base (26), the waterway joint II (11) is inserted into one end of the water passage, the other end of the water passage is connected with a quick-connect plug I (29), the connecting water pipe (27) is inserted into the recovery upper cover base (26), one end of the connecting water pipe (27) is inserted into the quick-connect plug I (29), and the other end of the connecting water pipe (27) is connected with the multistage filtering assembly.

6. The sewage recycling system according to claim 5, **characterized in that** the multistage filtering assembly comprises a foam filter (30), a primary sewage filter (31) and a secondary sewage filter (32), wherein the foam filter (30), the primary sewage filter (31) and the secondary sewage filter (32) are sequentially sleeved from outside to inside, one end of the secondary sewage filter (32) abuts against a bottom of the recovery bucket (24), the other end of the secondary sewage filter (32) is hermetically connected with the recovery upper cover base (26), the secondary sewage filter (32) is internally provided with a pipe sleeve connector (33), a water inlet is formed at one end of the pipe sleeve connector (33), the water inlet (34) is connected with a metal filter screen (41), the other end of the pipe sleeve connector (33) is connected with a quick-connect plug II (35), the connecting water pipe (27) is disposed in the secondary sewage filter (32), and the quick-connect plug II (35) is inserted into the connecting water pipe (27).

7. The sewage recycling system according to claim 5, **characterized in that** the exhaust float assembly comprises a float piece (36) and an airway filter (37), the recovery upper cover base (26) is connected with a diversion passage pipe (38) and a float mounting seat (39), an exhaust cylinder (40) is connected in the recovery bucket (24), one end of the exhaust cylinder (40) is communicated with an exterior of the recovery bucket (24), a plurality of air holes are formed in a side surface and one end of the airway filter (37), the other end of the airway filter (37) is connected with a stop plate (57), one end of the diversion passage pipe (38) is inserted into the airway filter (37), the other end of the diversion passage pipe (38) is inserted into the other end of the exhaust cylinder (40), and the float piece (36) is rotatably connected with the float mounting seat (39).

8. The sewage recycling system according to claim 1, **characterized in that** the water filling port is connected with a fixing ring (42), the fixing ring (42) is provided with a limiting groove (52), a water filling cover (54) is inserted into the water filling port, one end of the water filling cover (54) is connected with a holding block (53), a side surface of the other end of the water filling cover (54) is connected with a clamping block (55), and a size of the clamping block (55) is matched with that of the limiting groove (52).

9. The sewage recycling system according to claim 5, **characterized in that** the clean water tank (2) and the recovery upper cover (25) are each provided with a limiting recess (43), the limiting recess (43) is rotatably connected with a handle (44), the handle (44) is clamped with the limiting recess (43), the limiting recess (43) is provided with a yielding groove (45), and the yielding groove (45) is formed near a middle of the handle (44).

10. The sewage recycling system according to claim 1, **characterized in that** a connecting rod (46) and a handlebar (47) are disposed at an upper end of the machine body (1), one end of the connecting rod (46) is connected with the machine body (1), the other end of the connecting rod (46) is connected with the handlebar (47), an included angle between the handlebar (47) and the connecting rod (46) is less than 180 degrees, and rollers (48) are rotatably connected with a left side and a right side of a lower end of the machine body (1).
